(19) **Europäisches Patentamt**
**European Patent Office**
**Office européen des brevets**

(11) **EP 3 502 773 B1**

(12) **EUROPEAN PATENT SPECIFICATION**

(45) Date of publication and mention
of the grant of the patent:
**17.07.2024 Bulletin 2024/29**

(21) Application number: **17209061.5**

(22) Date of filing: **20.12.2017**

(51) International Patent Classification (IPC):
**G02F 1/13357** *(2006.01)*

(52) Cooperative Patent Classification (CPC):
**G02F 1/133603**

(54) **AN IMPROVED MODELLING METHOD FOR DESIGNING A BACKLIGHT MODULE FOR A FLAT-SCREEN TELEVISION**

VERBESSERTES VERFAHREN ZUM ENTWURF EINER RÜCKBELEUCHTUNGSEINHEIT FÜR EINEN FLACHBILDFERNSEHER

PROCÉDÉ DE MODÉLISATION AMÉLIORÉ POUR LA CONCEPTION D'UN RÉTROÉCLAIRAGE D'UN TÉLÉVISEUR À ÉCRAN PLAT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2019 Bulletin 2019/26**

(73) Proprietors:
• **Vestel Elektronik Sanayi ve Ticaret A.S.**
**45030 Manisa (TR)**
• **Özyegin Üniversitesi**
**34794 Çekmeköy/ Istanbul (TR)**

(72) Inventors:
• **Kurt, Olkan**
**45030 Manisa (TR)**
• **Yanikoglu, Ihsan**
**34794 Istanbul Cekmeköy (TR)**
• **Albey, Erinç**
**34794 Istanbul Cekmeköy (TR)**

(74) Representative: **Beck Greener LLP**
**Fulwood House**
**12 Fulwood Place**
**London WC1V 6HR (GB)**

(56) References cited:
**US-A1- 2010 020 264**

• **CHEN Y ET AL: "Design of a backlight module with a freeform surface by applying the Taguchi method", CHINESE OPTICS LETTERS, CHINESE OPTICAL SOCIETY, CN, vol. 13, no. 3, 032302, 10 March 2015 (2015-03-10), pages 032302-1 - 032302-5, XP009505048, ISSN: 1671-7694**
• **LUMILEDS: "Technical Datasheet DS25 Luxeon Emitter", 1 January 2005 (2005-01-01), USA, pages 1 - 19, XP055275056, Retrieved from the Internet <URL:https://www.sparkfun.com/datasheets/Components/Luxeon-I.pdf> [retrieved on 20160524]**

**Description**

The present invention relates to an improved modelling method for designing a flat-screen TV.

Flat-screen televisions using liquid crystal display (LCD) panels are well known in the art. There are a number of ways to design and build such structures in an efficient and robust manner. One such method is to use a backlight module structure (BMS). The design of BMS structures includes the design of the mechanical and optical parts of a display panel and determining the optimal relations between components.

It is known to provide certain specific configurations of display panel to ease manufacture. For example, US2015241624A1 discloses a backlight module includes a light guiding plate, a frame element, a light bar and a light-bar cover. The light guiding plate has a light output surface. The frame element includes a bottom surface and a side wall, the bottom surface is parallel to the light output surface of the light guiding plate, and the side wall is extended from the bottom surface and towards a direction perpendicular to the light output surface to ease assembly.

"Design of a backlight module with a freeform surface by applying the Taguchi method" Chen et al, Chinese Optics Letters, vol 13, No 3, 032302 discloses a freeform structure which is integrated into a direct-type LED backlight. The performance of the backlight is then optimised using the Taguchi method. This design method does not include iterative linear programming. US 2010/020264 discloses a light emitting device assembly having a configuration and structure in which luminance irregularities and color irregularities are reduced.

However, whilst improved structures and configurations may ease manufacture, to date known arrangements and methods are not able to systematically optimise the mechanical and optical properties of an LED LCD panel to give optimal optical or mechanical properties. The present invention, in embodiments, addresses this issue.

According to the present invention, there is provided a method as defined in claim 1. Advantageous embodiments are defined in the dependent claims.

Embodiments of the present invention will now be described in detail with reference to the accompanying drawings, in which:

Figure 1 is a general view of an exemplary flat-screen display device in the form of a direct light emitting diode (D-LED) television;

Figure 2 is an exploded view of an exemplary backplane module system (BMS) for use in an exemplary flat-screen display device of Figure 1;

Figure 3 is an isometric view of an optical component element forming part of the backplane module system of Figure 2;

Figure 4 is a flowchart illustrating a method of designing a D-LED BMS for a D-LED television according to an embodiment of the present invention;

Figure 5 is a schematic diagram showing optical parameters; and

Figure 6 is a section view of the panel 10 of Figure 2 showing mechanical parameters.

The present invention relates to a method of determining an optimal configuration for a backlight module system. In embodiments, this is achieved through mathematical modelling.

There are a large number of parameters and variables which need to be considered when designing the specification for a backlight module. In general summary, the method comprises determining these parameters and associated constraints, before defining a modelling system and exporting the defined system to linear programming software. By use of linear programming, a set of linear equations are solved to determine the optimal design for optimal optical performance of the backlight module system (BMS).

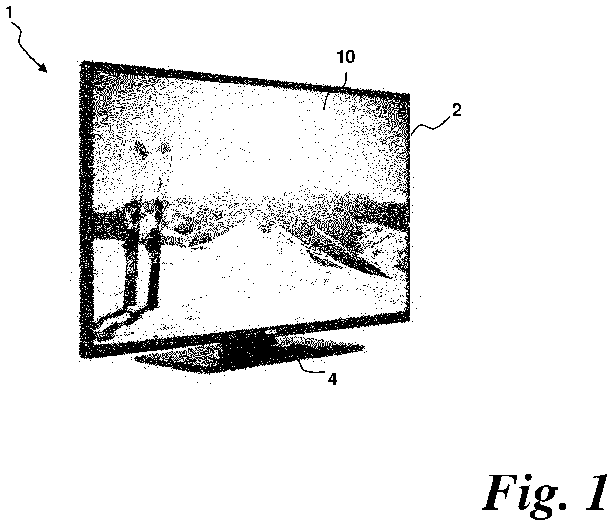

Figure 1 shows an exemplary display device 1 in the form of a Direct-Light Emitting Diode (D-LED) television display. The display device 1 has an outer housing 2 supported by a stand 4. A display panel 10 is located within the outer housing 2.

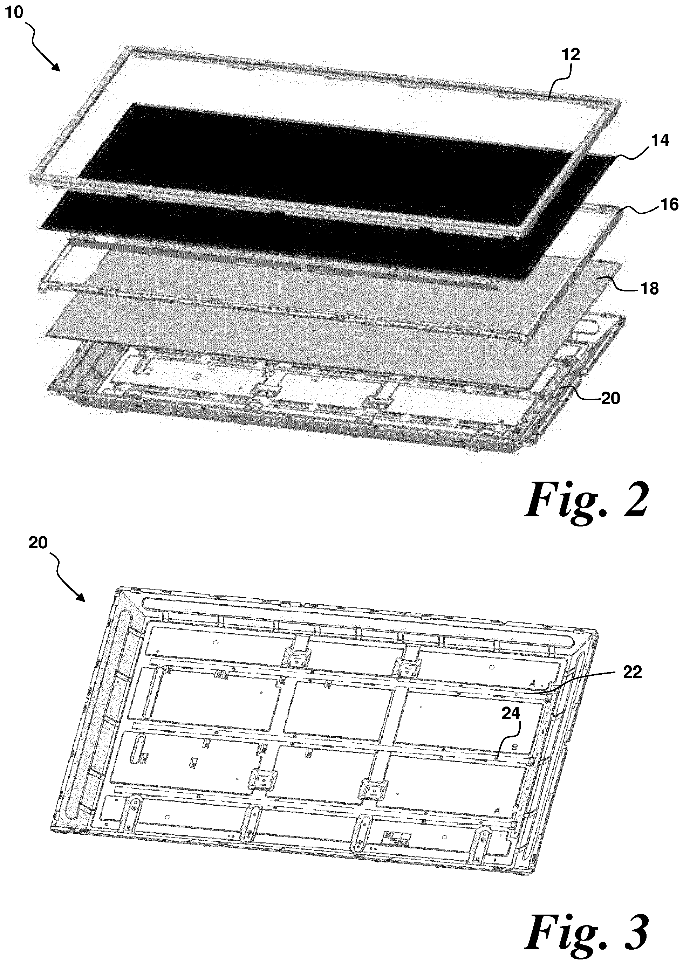

An exploded view of an exemplary display panel 10 is shown in Figure 2.

The display panel 10 comprises a front screen 12, a Liquid Crystal Display (LCD) cell panel 14, a middle frame 16, reflector and diffuser sheet 18 and a backcover backlight unit 20.

The front screen 12 is primarily a cosmetic frame through which the end user views the display. In addition, the front screen 12 has encapsulation and environmental protection functions, for example, to protect the LCD cell panel 14 from damage. Therefore, the front screen 12 is an important part of the group of components forming the panel 10.

The LCD cell panel 14 is at least partially formed from glass. LCDs are well known in the art and the skilled person would readily understand the general concept and operation of such a panel. In essence, the LCD cell panel 14 has a plurality of cells which are arranged to represent pixels of the display. Depending upon the electrical configuration, each cell is arranged either to transmit light or to prevent light transmission. Therefore, the LCD panel 14 is a transmissive element and requires a backlight or other light source to illuminate the display.

With regard to the LCD cell panel 14, there is an active area (AA) which a key issue for designing the mechanical and optical properties of the panel. Optical performance criteria comprise, in general, luminance and uniformity and these are measured inside the active area line, essentially the area of the screen viewable by the end user.

The Middle Frame 16 is, in embodiments, formed from plastic raw material such as, for example, "PC+ABS/GF %15". Resilient plastic is used in this part in order to absorb the external forces towards the cell and other optical materials. The middle frame 16 is located between the optical arrangement and the LCD cell panel 14 to keep these elements at an accurate distance from each other.

The reflector sheet 18 is generally located at the bottom of the optical components. It enables the light to be reflected in an actively managed and accurate manner.

The diffuser sheet 18 is configured to scatter light and avoid deterioration of distribution of light. The diffuser sheet 18 comprises a plurality of internal micro spheres. Moreover, the diffuser sheet 18 ensures the flatness of the other optical components and has a thermal energy absorbing function and reduces the thermal load on other optical components.

Finally, the BC BLU 20 is arranged to support and contain the other parts and hold them in a defined configuration with accurate spacing. Essentially, the BC BLU 20 is a housing part formed from a strong and rigid material such as hard plastic and/or metal.

The BC BLU 20 is shown in more detail in Figure 3. The BC BLU 20 comprises a plurality of LED bars 22 and lenses 24. The lenses 24 provide angular illumination or directivity. The assembly gaps and positional and configurational relationships between both the mechanical and the optical parts mentioned above are specified by looking at some design parameters. Specification of design rules can be changed between different projects with different size preferences, according to the active area desired or used.

In embodiments, the present invention relates to a method of designing a D-LED display device. In essence, the direct-LED concept is that the LED packages are located as an array directly behind the LCD screen and light passes from the LED packages directly to the screen. This is in contrast to edge-emitting LED designs where the LED devices illuminate the display screen from the side through the use of reflectors and refractors. Clearly, the design parameters for D-LED designs are specific to this configuration of device. However, the general operation and principles of the present invention are applicable to different display device designs and this would be readily appreciated by the skilled person.

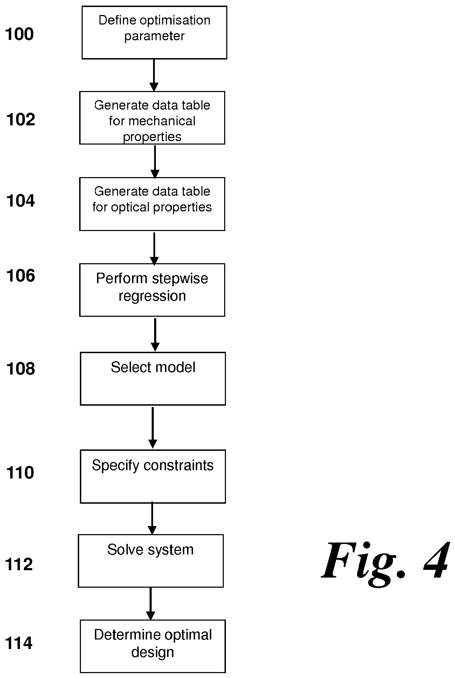

A method according to an embodiment of the present invention will now be described with reference to Figure 4. Figure 4 shows a flow chart of a method for designing an optimal configuration for an D-LED display device such as the display device 1 shown in Figure 1.

The present invention provides an improved approach for designing a display device such as a LCD television by considering both the optical and the mechanical properties and optimising these properties to produce an optimal display device which is optimised for luminance values.

**Step 100: Define optimisation parameter**

At step 100, the optimisation parameter is defined. This is the parameter that is intended to be solved for and optimised through the method of the present invention.

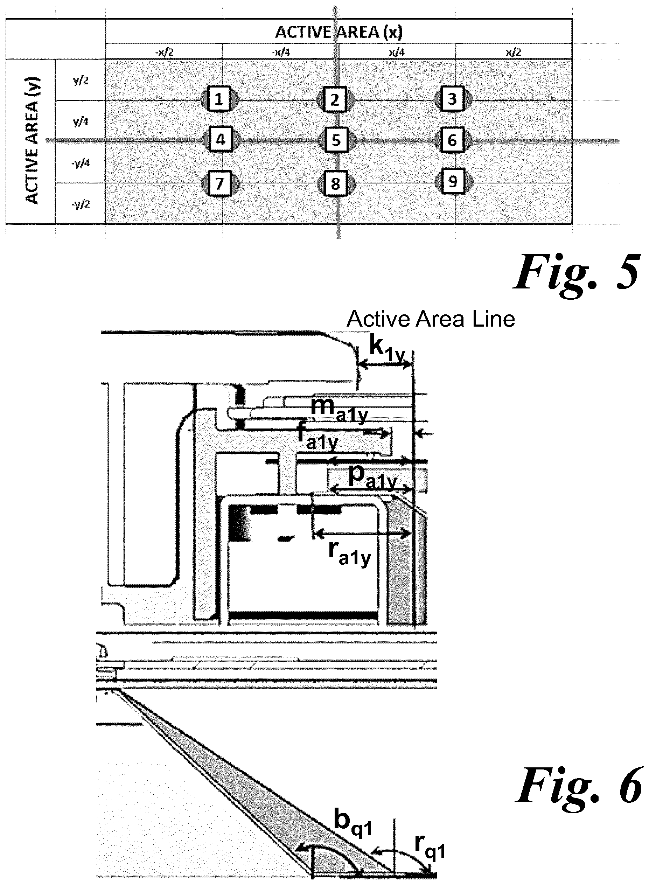

In the present invention, the parameter is luminance. More specifically, the parameter is the luminance of node 5 in Figure 5 as will be described below.

The optical performance of a TV is heavily influenced by the gathered luminance. Luminance is a photometric measure of the luminous intensity per unit area of light travelling in a given direction. It describes the amount of light that passes through, is emitted or reflected from a particular area, and falls within a given solid angle. The SI unit for luminance is candela per square metre ($cd/m^2$). A non-SI term for the same unit is the "nit".

The target performance for a TV device is specified by a calculation of *uniformity which* is described as the ratio between the lowest and highest luminance values. Uniformity is measured on spots which are gathered by dividing a panel into 4x4 sections as shown in Figure 5. The expression for luminance is shown in expression 1) below:

$$1) \qquad uniformity = \frac{the\ lowest\ luminance\ in\ a\ region}{the\ highest\ luminance\ in\ a\ region}$$

A typical, non-limiting, target uniformity of 0.75 is desired for optical criteria. The value of the luminance at node 5 (i.e. in the centre of the 4x4 panel shown in Figure 4) is the highest because this node is in the middle of the area which gathers the light directly to itself. This is the luminance which will form the objective function for this embodiment of the invention.

The method proceeds to step 102.

**Step 102: Generate data table for mechanical properties**

At step 102, the mechanical design parameters are acquired and determined. The acquired mechanical design parameters are explained below and illustrated with reference to Figure 6.

$m_{aiy}$, distance from **middle frame** to AA line
$f_{aiy}$, distance from **optic films** to AA line
$p_{aiy}$, distance from **diffuser film** to AA line
$r_{aiy}$, distance from **reflector sheet** to AA line
$k_{iy}$, distance from **front cover** to AA line
$b_{qi}$, angle of edges of **BC BLU**
$r_{qi}$, angle of edges of **reflector sheet**
$b_i$, distance from folded edge of **BC BLU** to AA line
$r_i$, distance from folded edge of **reflector sheet** to AA line
$i = 1$ *for bottom edge*
$i = 2$ *for top edge*
$i = 3,4$ *for right/left edge*

It is important to note that bottom edge values are always separated from the values for the other edges. **"i=2"** is for both top and right/left edges except the parameters $b_i$, and $r_i$ because they must be examined for each edge independently.

Once the relevant design parameters have been identified and appropriate determinations made for various configurations and sizes, then a table can be generated. Different TV models may have typical sizes from 32" to 75". There are mechanical parameters for each configuration.

An example of such a table is shown in Table 1 below.

| | Mechanical Distances to Active Area | | | | | | | | | | | | | | | | | | | | | |
|---|---|---|---|---|---|---|---|---|---|---|---|---|---|---|---|---|---|---|---|---|---|---|
| | $m_{a1y}$ | $f_{a1y}$ | $p_{a1y}$ | $r_{a1y}$ | $k_{1y}$ | $b_{g1}$ | $r_{g1}$ | $m_{a2y}$ | $f_{2y}$ | $p_{a2y}$ | $r_{a2y}$ | $k_{2y}$ | $b_{g2}$ | $r_{g2}$ | $b_1$ | $b_2$ | $b_3$ | $b_4$ | $r_1$ | $r_2$ | $r_3$ | $r_4$ |
| 32261 | 0,70 | 6,00 | 6,85 | 7,00 | 3,70 | 135,00° | 144,50° | 0,70 | 6,00 | 5,50 | 7,00 | 3,70 | 125,00° | 144,50° | 3,20 | 3,05 | 2,85 | 2,85 | 1,40 | 1,50 | 1,50 | 1,50 |
| 39261 | 0,70 | 4,00 | 5,30 | 4,80 | 1,80 | 120,00° | 154,50° | 0,70 | 4,30 | 3,90 | 8,70 | 2,50 | 120,00° | 154,50° | 0,00 | 1,80 | 1,70 | 1,70 | 1,80 | 1,40 | 1,50 | 1,50 |
| 40261 | 0,70 | 6,00 | 7,40 | 7,40 | 3,70 | 120,00° | 147,20° | 0,70 | 5,45 | 6,13 | 6,00 | 3,70 | 135,00° | 147,20° | 2,50 | 2,00 | 2,00 | 2,00 | 1,60 | 1,50 | 1,20 | 1,20 |
| 40 1NX | 0,70 | 4,20 | 6,40 | 6,25 | 1,00 | 120,00° | 149,00° | 0,70 | 5,70 | 5,30 | 5,70 | 1,00 | 135,00° | 147,20° | 1,00 | 1,50 | 1,50 | 1,50 | 1,60 | 1,80 | 1,80 | 1,80 |
| 43261 | 0,70 | 6,00 | 4,70 | 6,00 | 2,20 | 105,00° | 144,40° | 0,70 | 3,70 | 3,70 | 3,70 | 2,20 | 135,00° | 144,40° | 1,50 | 1,50 | 1,50 | 1,50 | 1,30 | 1,30 | 1,30 | 1,30 |
| 48261 | 0,70 | 7,40 | 6,70 | 7,40 | 2,30 | 120,00° | 152,80° | 0,70 | 6,50 | 4,70 | 6,50 | 2,30 | 135,00° | 152,80° | 1,50 | 1,50 | 1,50 | 1,50 | 0,50 | 0,50 | 0,50 | 0,50 |
| 49261 | 0,70 | 7,40 | 6,70 | 7,40 | 2,30 | 120,00° | 151,20° | 0,70 | 6,40 | 4,60 | 6,40 | 2,30 | 135,00° | 151,20° | 1,60 | 1,50 | 1,50 | 1,50 | 0,50 | 0,50 | 0,50 | 0,50 |
| 50261 | 0,70 | 7,20 | 6,50 | 7,20 | 1,80 | 120,00° | 154,10° | 0,70 | 6,60 | 4,80 | 6,60 | 1,80 | 135,00° | 154,10° | 1,65 | 1,80 | 1,80 | 1,80 | 0,50 | 0,50 | 0,50 | 0,50 |
| 55261 | 0,80 | 7,10 | 7,10 | 7,70 | 1,80 | 120,00° | 149,00° | 0,80 | 6,60 | 5,10 | 6,60 | 1,80 | 120,00° | 149,00° | 2,00 | 2,00 | 2,00 | 2,00 | 0,50 | 0,50 | 0,50 | 0,50 |
| 40300 | 0,70 | 5,10 | 5,10 | 5,10 | 3,30 | 150,00° | 163,10° | 0,70 | 4,60 | 4,60 | 4,60 | 4,20 | 150,00° | 163,10° | 1,50 | 1,50 | 1,50 | 1,50 | 1,20 | 1,20 | 1,20 | 1,20 |
| 43300 | 0,70 | 6,00 | 4,70 | 6,00 | 2,60 | 150,00° | 169,50° | 0,70 | 3,70 | 3,70 | 3,70 | 2,60 | 150,00° | 169,50° | 0,90 | 0,90 | 0,90 | 0,90 | 1,00 | 1,00 | 1,00 | 1,00 |
| 48300 | 0,70 | 6,60 | 5,10 | 6,60 | 3,50 | 150,00° | 161,50° | 0,70 | 4,30 | 4,30 | 4,30 | 3,50 | 150,00° | 161,50° | 1,50 | 1,50 | 1,50 | 1,50 | 1,20 | 1,20 | 1,20 | 1,20 |
| 55300 | 0,80 | 6,60 | 5,60 | 6,20 | 3,00 | 155,00° | 161,50° | 0,80 | 4,70 | 4,70 | 5,20 | 3,50 | 150,00° | 161,50° | 1,50 | 1,50 | 1,50 | 1,50 | 1,30 | 1,20 | 1,20 | 1,20 |
| 40400 | 0,30 | 6,75 | 5,25 | 6,75 | 3,55 | 120,00° | 147,20° | 0,30 | 4,75 | 3,35 | 4,75 | 4,20 | 120,00° | 147,20° | -0,50 | -0,50 | -0,50 | -0,50 | -1,00 | -1,00 | -1,00 | -1,00 |
| 43400 | 0,30 | 6,10 | 4,40 | 6,10 | 2,60 | 120,00° | 144,40° | 0,30 | 3,80 | 2,40 | 3,80 | 2,60 | 120,00° | 144,40° | -0,50 | -0,50 | -0,50 | -0,50 | -1,00 | -1,00 | -1,00 | -1,00 |
| 49400 | 0,30 | 5,70 | 4,20 | 5,90 | 2,20 | 120,00° | 151,20° | 0,30 | 4,10 | 2,70 | 4,10 | 3,00 | 120,00° | 151,20° | -0,70 | -0,70 | -0,70 | -0,70 | -1,20 | -1,20 | -1,20 | -1,20 |
| 50400 | 0,30 | 6,90 | 5,40 | 6,85 | 1,70 | 120,00° | 151,20° | 0,30 | 5,30 | 3,30 | 5,30 | 2,80 | 120,00° | 151,20° | -0,50 | -0,50 | -0,50 | -0,50 | -1,00 | -1,00 | -1,00 | -1,00 |
| 55400 | 0,30 | 7,00 | 5,50 | 7,00 | 3,00 | 120,00° | 149,00° | 0,30 | 5,40 | 3,30 | 5,40 | 3,50 | 120,00° | 149,00° | -0,50 | -0,50 | -0,50 | -0,50 | -1,00 | -1,00 | -1,00 | -1,00 |
| 65400 | 0,50 | 7,00 | 5,60 | 7,00 | 0,80 | 130,00° | 151,70° | 0,50 | 5,20 | 3,20 | 5,20 | 0,80 | 135,00° | 151,60° | 1,30 | -0,80 | -0,80 | -0,80 | -1,00 | -1,25 | -1,25 | -1,25 |
| 75400 | 0,50 | 6,90 | 5,30 | 6,90 | 1,00 | 135,00° | 150,70° | 0,50 | 4,20 | 3,20 | 4,20 | 1,00 | 135,00° | 150,70° | 1,30 | -0,50 | -0,50 | -0,50 | -1,00 | -1,00 | -1,00 | -1,00 |
| 43500 | 0,30 | 6,10 | 4,40 | 6,10 | 1,50 | 120,00° | 152,70° | 0,30 | 3,80 | 2,40 | 3,80 | 2,00 | 120,00° | 152,70° | -0,50 | -0,50 | -0,50 | -0,50 | -1,00 | -1,00 | -1,00 | -1,00 |
| 49500 | 0,30 | 5,70 | 4,20 | 5,70 | 2,50 | 120,00° | 152,10° | 0,30 | 4,10 | 2,70 | 4,10 | 1,40 | 120,00° | 152,10° | -0,70 | -0,70 | -0,70 | -0,70 | -1,20 | -1,20 | -1,20 | -1,20 |
| 55500 | 0,30 | 7,00 | 5,50 | 7,00 | 3,00 | 130,00° | 158,20° | 0,30 | 5,40 | 3,30 | 5,40 | 3,00 | 135,00° | 158,20° | -0,50 | -0,50 | -0,50 | -0,50 | -1,00 | -1,00 | -1,00 | -1,00 |

**Table 1.**

The method then proceeds to step 104.

**Step 104: Generate data table for optical properties**

At step 104, the optical design parameters are acquired and determined. The acquired optical design parameters are explained below. It is shown in Figure 4 that steps 102 and 104 are carried out in series. However, this need not be the case and other sequences may be used.

Optical design parameters are explained below:

$L_j$ , # of Regional Lenses
$LU_j$, Luminance Values

**Optical Distance,** panel depth
**Lens Luminescence Angle,** angle of scattered light
**#of Total Lenses**
*j = 1..9 for nodes gathered as shown in figure 5*

These optical parameters can then be gathered in the manner in which the mechanical parameters are gathered in step 102. This results in tables such as exemplary tables 2 and 3 below.

| Optical Properties | | | | #of Lenses | | | | | | | | |
|---|---|---|---|---|---|---|---|---|---|---|---|---|
| Optical Distance | Lens Angle | #of Led Bars | #of Total Lenses | L1 | L2 | L3 | L4 | L5 | L6 | L7 | L8 | L9 |
| 40,00 | 160,00° | 2,00 | 22,00 | 4,00 | 3,00 | 4,00 | 8,00 | 6,00 | 8,00 | 4,00 | 3,00 | 4,00 |
| 40,00 | 160,00° | 3,00 | 26,00 | 4,00 | 5,00 | 4,00 | 4,00 | 4,00 | 4,00 | 4,00 | 5,00 | 4,00 |
| 40,00 | 160,00° | 3,00 | 23,00 | 4,00 | 4,00 | 4,00 | 3,00 | 3,00 | 3,00 | 4,00 | 4,00 | 4,00 |
| 40,00 | 160,00° | 3,00 | 23,00 | 4,00 | 4,00 | 4,00 | 3,00 | 3,00 | 3,00 | 4,00 | 4,00 | 4,00 |
| 40,00 | 160,00° | 4,00 | 28,00 | 6,00 | 6,00 | 6,00 | 6,00 | 6,00 | 6,00 | 6,00 | 6,00 | 6,00 |
| 40,00 | 160,00° | 6,00 | 30,00 | 6,00 | 8,00 | 6,00 | 9,00 | 12,00 | 9,00 | 6,00 | 8,00 | 6,00 |
| 40,00 | 160,00° | 6,00 | 30,00 | 6,00 | 8,00 | 6,00 | 9,00 | 12,00 | 9,00 | 6,00 | 8,00 | 6,00 |
| 40,00 | 160,00° | 6,00 | 30,00 | 6,00 | 8,00 | 6,00 | 9,00 | 12,00 | 9,00 | 6,00 | 8,00 | 6,00 |
| 40,00 | 160,00° | 6,00 | 42,00 | 9,00 | 9,00 | 9,00 | 12,00 | 12,00 | 12,00 | 9,00 | 9,00 | 9,00 |
| 15,00 | 172,00° | 10,00 | 50,00 | 10,00 | 12,00 | 10,00 | 15,00 | 18,00 | 15,00 | 10,00 | 12,00 | 10,00 |
| 15,00 | 172,00° | 10,00 | 50,00 | 12,00 | 12,00 | 12,00 | 15,00 | 18,00 | 15,00 | 12,00 | 12,00 | 12,00 |
| 15,00 | 172,00° | 6,00 | 68,00 | 16,00 | 20,00 | 16,00 | 22,00 | 26,00 | 22,00 | 16,00 | 20,00 | 16,00 |
| 15,00 | 172,00° | 12,00 | 84,00 | 18,00 | 18,00 | 18,00 | 30,00 | 30,00 | 30,00 | 18,00 | 18,00 | 18,00 |
| 40,00 | 160,00° | 3,00 | 27,00 | 4,00 | 5,00 | 4,00 | 4,00 | 5,00 | 4,00 | 4,00 | 5,00 | 4,00 |
| 40,00 | 160,00° | 4,00 | 34,00 | 8,00 | 9,00 | 8,00 | 8,00 | 10,00 | 8,00 | 8,00 | 9,00 | 8,00 |
| 40,00 | 160,00° | 6,00 | 42,00 | 9,00 | 12,00 | 9,00 | 15,00 | 20,00 | 15,00 | 9,00 | 12,00 | 9,00 |
| 40,00 | 160,00° | 6,00 | 42,00 | 9,00 | 12,00 | 9,00 | 15,00 | 20,00 | 15,00 | 9,00 | 12,00 | 9,00 |
| 40,00 | 160,00° | 6,00 | 52,00 | 10,00 | 16,00 | 10,00 | 16,00 | 18,00 | 16,00 | 10,00 | 16,00 | 10,00 |
| 30,00 | 160,00° | 11,00 | 78,00 | 15,00 | 16,00 | 15,00 | 15,00 | 16,00 | 15,00 | 15,00 | 16,00 | 15,00 |
| 30,00 | 160,00° | 13,00 | 116,00 | 24,00 | 28,00 | 24,00 | 30,00 | 34,00 | 30,00 | 24,00 | 28,00 | 24,00 |
| 25,00 | 160,00° | 4,00 | 36,00 | 9,00 | 10,00 | 9,00 | 10,00 | 12,00 | 10,00 | 9,00 | 10,00 | 9,00 |
| 25,00 | 160,00° | 8,00 | 48,00 | 12,00 | 12,00 | 12,00 | 16,00 | 16,00 | 16,00 | 12,00 | 12,00 | 12,00 |
| 25,00 | 160,00° | 9,00 | 54,00 | 12,00 | 15,00 | 12,00 | 16,00 | 20,00 | 16,00 | 12,00 | 15,00 | 12,00 |

**Table 2**

| Optical Properties | | | | #of Lenses | | | | | | | | |
|---|---|---|---|---|---|---|---|---|---|---|---|---|
| Optical Distance | Lens Angle | #of Led Bars | #of Total Lenses | L1 | L2 | L3 | L4 | L5 | L6 | L7 | L8 | L9 |
| 40,00 | 160,00° | 2,00 | 22,00 | 4,00 | 3,00 | 4,00 | 8,00 | 6,00 | 8,00 | 4,00 | 3,00 | 4,00 |
| 40,00 | 160,00° | 3,00 | 26,00 | 4,00 | 5,00 | 4,00 | 4,00 | 4,00 | 4,00 | 4,00 | 5,00 | 4,00 |
| 40,00 | 160,00° | 3,00 | 23,00 | 4,00 | 4,00 | 4,00 | 3,00 | 3,00 | 3,00 | 4,00 | 4,00 | 4,00 |
| 40,00 | 160,00° | 3,00 | 23,00 | 4,00 | 4,00 | 4,00 | 3,00 | 3,00 | 3,00 | 4,00 | 4,00 | 4,00 |
| 40,00 | 160,00° | 4,00 | 28,00 | 6,00 | 6,00 | 6,00 | 6,00 | 6,00 | 6,00 | 6,00 | 6,00 | 6,00 |
| 40,00 | 160,00° | 6,00 | 30,00 | 6,00 | 8,00 | 6,00 | 9,00 | 12,00 | 9,00 | 6,00 | 8,00 | 6,00 |
| 40,00 | 160,00° | 6,00 | 30,00 | 6,00 | 8,00 | 6,00 | 9,00 | 12,00 | 9,00 | 6,00 | 8,00 | 6,00 |
| 40,00 | 160,00° | 6,00 | 30,00 | 6,00 | 8,00 | 6,00 | 9,00 | 12,00 | 9,00 | 6,00 | 8,00 | 6,00 |
| 40,00 | 160,00° | 6,00 | 42,00 | 9,00 | 9,00 | 9,00 | 12,00 | 12,00 | 12,00 | 9,00 | 9,00 | 9,00 |
| 15,00 | 172,00° | 10,00 | 50,00 | 10,00 | 12,00 | 10,00 | 15,00 | 18,00 | 15,00 | 10,00 | 12,00 | 10,00 |
| 15,00 | 172,00° | 10,00 | 50,00 | 12,00 | 12,00 | 12,00 | 15,00 | 18,00 | 15,00 | 12,00 | 12,00 | 12,00 |
| 15,00 | 172,00° | 6,00 | 68,00 | 16,00 | 20,00 | 16,00 | 22,00 | 26,00 | 22,00 | 16,00 | 20,00 | 16,00 |
| 15,00 | 172,00° | 12,00 | 84,00 | 18,00 | 18,00 | 18,00 | 30,00 | 30,00 | 30,00 | 18,00 | 18,00 | 18,00 |
| 40,00 | 160,00° | 3,00 | 27,00 | 4,00 | 5,00 | 4,00 | 4,00 | 5,00 | 4,00 | 4,00 | 5,00 | 4,00 |
| 40,00 | 160,00° | 4,00 | 34,00 | 8,00 | 9,00 | 8,00 | 8,00 | 10,00 | 8,00 | 8,00 | 9,00 | 8,00 |
| 40,00 | 160,00° | 6,00 | 42,00 | 9,00 | 12,00 | 9,00 | 15,00 | 20,00 | 15,00 | 9,00 | 12,00 | 9,00 |
| 40,00 | 160,00° | 6,00 | 42,00 | 9,00 | 12,00 | 9,00 | 15,00 | 20,00 | 15,00 | 9,00 | 12,00 | 9,00 |
| 40,00 | 160,00° | 6,00 | 52,00 | 10,00 | 16,00 | 10,00 | 16,00 | 18,00 | 16,00 | 10,00 | 16,00 | 10,00 |
| 30,00 | 160,00° | 11,00 | 78,00 | 15,00 | 16,00 | 15,00 | 15,00 | 16,00 | 15,00 | 15,00 | 16,00 | 15,00 |
| 30,00 | 160,00° | 13,00 | 116,00 | 24,00 | 28,00 | 24,00 | 30,00 | 34,00 | 30,00 | 24,00 | 28,00 | 24,00 |
| 25,00 | 160,00° | 4,00 | 36,00 | 9,00 | 10,00 | 9,00 | 10,00 | 12,00 | 10,00 | 9,00 | 10,00 | 9,00 |
| 25,00 | 160,00° | 8,00 | 48,00 | 12,00 | 12,00 | 12,00 | 16,00 | 16,00 | 16,00 | 12,00 | 12,00 | 12,00 |
| 25,00 | 160,00° | 9,00 | 54,00 | 12,00 | 15,00 | 12,00 | 16,00 | 20,00 | 16,00 | 12,00 | 15,00 | 12,00 |

**Table 3**

The method then proceeds to step 106.

**Step 106: Perform stepwise regression**

There are many DLED TV projects that are designed from sizes 32" to 75". The mechanical and optical parameters have been obtained as shown in Tables 1 to 3 above.

The objective function is the luminance on the node "5" (see Figure 5). In order to check significance of decision variables, a stepwise regression is performed according to design guide data.

The method, in more detail, involves checking the significance of the parameters using stepwise regression. With this method, the variance inflation factors and correlation matrices are then determined in order to avoid coincidences between parameters. Further, regression results show the relation between the optical and mechanical parameters and enable effective modelling and optimisation by assigning rules according to minimum or maximum values of parameters.

In each step of the regression, a variable is considered for addition to or subtraction from the set of explanatory variables based on some prespecified criterion.

This may be based on any number of criterions. Common criterions include: Akaike information criterion, Bayesian information criterion, Mallows's Cp, PRESS, or false discovery rate.

This regression method according to an embodiment is the combination of both forward selection and backward elimination. Forward selection starts with no variables and adds parameters one by one and stops when the point model has no improvement. In contrary, backward elimination starts with all variables and tests the deletion of each variable one by one to get a better model fit.

In other words, forward selection involves starting with no variables in the model, testing the addition of each variable using a chosen model fit criterion, adding the variable whose inclusion gives the most statistically significant improvement of the fit, and repeating this process until none improves the model to a statistically significant extent.

In contrast, backward elimination involves starting with all candidate variables, testing the deletion of each variable using a chosen model fit criterion, deleting the variable whose loss gives the most statistically insignificant deterioration of the model fit, and repeating this process until no further variables can be deleted without a statistically significant loss of fit.

Bidirectional elimination includes a combination of the above, testing at each step for variables to be included or excluded.

By doing stepwise regression, a large number of results are obtained.

The method proceeds to step 108.

### Step 108: Select model

Based on the stepwise regression in step 106, a model is selected.

There are models having different number of variables but we selected the models having 6. It shows us more relations of parameters in a panel.

Finally, we selected models according to their;

- adjusted $R^2$ values desired as much as possible,
- AIC values desired as low as possible
- TestMAPE values desired as low as possible
- coef-pvalues-max lower than 0.05,
- pvalue lower than 0.05,
- vif-max lover than 6

In addition, designer empirical knowledge is also an important criteria for selection of models because the closer to real possible influence the better the results obtained from the mathematical model.

Thus, the final selected objective function is appeared as written below in expression 2):

$$2)\ LU_5 \sim 939.87 + 113.84^*k_{1y} - 5.26^*b_{q1} - 81.78^*k_{2y} - 31.65^*b_2 + 2.3^*TotalLenses$$

The method proceeds to step 110.

### Step 110: Specify constraints

At step 110, constraints are applied to the model to enable solving using linear iterative methods.

Uniformity is a constraint as described above - a target parameter with a value of "0.75". So, the suitable luminance function was checked for all other nodes as shown in Figure 5.

These are shown below;

$$LU_1 \sim 2840.77 - 31.43{*}p_{a1y} + 92.97{*}k_{1y} - 80.96{*}k_{2y} - 14.82{*}LensAngle + 1.4{*}TotalLenses$$

$LU_2 \sim$.......
$LU_3 \sim$.......
$LU_4 \sim$.......
$LU_6 \sim$.......
$LU_7 \sim$.......
$LU_8 \sim$.......
$LU_9 \sim$.......

Furthermore, upper and lower bounds of mechanical variables comprise additional constraints.

Moreover, distances of parts to the active area (AA) have limitations in terms of the available and compared distances.

Another constraint is mechanical orientation of lenses which has a restriction in terms of distance to each other (i.e. spacing between them in different dimensions). So, we can limit the number of lenses by applying the rule of,

$x_{min} = 85.00$ mm
$y_{min} = 42.50$ mm

$$\#of\ total\ lenses < \frac{active\ area}{x * y}$$

Finally, the lens ratio can be used as a constraint:

$$R_i = \frac{L_i}{total\ \#\ of\ lenses}$$

### Step 112: Solve system

Once the model is defined with constraints, iterative linear programming (ILP) tools are utilised to solve the system for optimal values of the design.

The method proceeds to step 114.

### Step 114: Determine optimal design

Once the parameters have been obtained in step 114, an optimal design configuration can be determined. This can, optionally, be used in a manufacturing process to build a backlight module and display device according to the optimal design.

It is also intended that the present invention covers a backlight module made to the design created by the above steps.

Embodiments of the present invention have been described with particular reference to the examples illustrated. While specific examples are shown in the drawings and are herein described in detail, it should be understood, however, that the drawings and detailed description are not intended to limit the invention to the particular form disclosed.

It will be appreciated that variations and modifications may be made to the examples described within the scope of the present invention as defined in the appended claims.

### Claims

1. A method of designing a backlight module for a flat panel display device having a liquid crystal display, LCD, panel, the method comprising the steps of:

    a) defining (100) mechanical and optical parameters for mechanical and optical components of the display device, wherein one or more of the mechanical parameters comprises: the mechanical distances to one or more active area, AA, lines representing the border of the active area of the display panel, including the distance from an edge of a middle frame to the AA line, the distance from an edge of an optic film to the AA line, the distance from an edge of a diffuser film to the AA line, the distance from an edge of a reflector sheet to the AA line, and the distance from an edge of a front cover to the AA line; the angle of one or more edges of a back cover backlight unit forming part of a flat panel display design; and the angle of one or more edges of a reflector sheet forming part of a flat panel display design; and wherein one or more of the optical parameters comprises: the number of lenses in a predefined region; and the lens ratio of one or more lenses forming part of a flat panel display design;

b) generating (108) a model based at least in part on the defined mechanical and optical parameters, the model defining one or more relationships between a luminance of the backlight module and one or more mechanical and one or more optical parameters as one or more linear equations;

c) applying (110) constraints on the values of the mechanical and optical parameters within the model;

d) solving (112), utilising the model and said defined constraints, said one or more linear equations on a computer system using linear iterative methods to generate a configuration of mechanical and optical components forming a design of a backlight module which is optimised for said luminance; and

e) generating (114) a design for a backlight module based on said generated configuration.

2. A method according to claim 1 wherein said luminance is the luminance of a specified central point of the display device.

3. A method according to claim 1 or 2, wherein the flat panel display device has an LED backlight.

4. A method according to claim 3, wherein the LED backlight is configured and arranged, in use, to illuminate the LCD panel directly from behind.

5. A method according to any one of the preceding claims, wherein one or more mechanical constraints comprise one or more of: upper and/or lower bounds of mechanical variables; distance of mechanical parts to the active area; mechanical orientation and/or spacing of one or more lenses forming part of a flat panel display design.

6. A method according to any one of the preceding claims, wherein one or more of the optical constraints comprises uniformity of light emission.

7. A method according to any one of the preceding claims, wherein step b) is based at least in part on obtained empirical mechanical and optical parameter values.

8. A method according to any one of the preceding claims, further comprising the step of:
f) producing a backlight module defined according to the generated design.

**Patentansprüche**

1. Verfahren zum Gestalten eines Hintergrundbeleuchtungsmoduls für eine Flachbildschirm-Anzeigevorrichtung mit einem Flüssigkristallanzeige(LCD)-Bildschirm, wobei das Verfahren die folgenden Schritte umfasst:

a) Definieren (100) mechanischer und optischer Parameter für mechanische und optische Komponenten der Anzeigevorrichtung, wobei einer oder mehrere der mechanischen Parameter Folgendes umfassen: die mechanischen Abstände zu einer oder mehreren Linien aktiver Bereiche (active area - AA), wobei die Linien die Grenze des aktiven Bereichs des Anzeigebildschirms darstellen, einschließlich des Abstands von einer Kante eines mittleren Rahmens zu der AA-Linie, des Abstands von einer Kante einer optischen Folie zu der AA-Linie, des Abstands von einer Kante einer Diffusorfolie zu der AA-Linie, des Abstands von einer Kante einer Reflektorfolie zu der AA-Linie und der Abstand von einer Kante einer vorderen Abdeckung zu der AA-Linie; den Winkel einer oder mehrerer Kanten einer hinteren Abdeckungshintergrundbeleuchtungseinheit, die einen Teil einer Flachbildschirmgestaltung bildet; und den Winkel einer oder mehrerer Kanten einer Reflektorfolie, die einen Teil einer Flachbildschirmgestaltung bildet; und wobei einer oder mehrere der optischen Parameter Folgendes umfassen: die Anzahl von Linsen in einem vordefinierten Bereich; und das Linsenverhältnis einer oder mehrerer Linsen, die Teil einer Flachbildschirmgestaltung sind;

b) Erzeugen (108) eines Modells, das mindestens teilweise auf den definierten mechanischen und optischen Parametern basiert, wobei das Modell eine oder mehrere Beziehungen zwischen einer Leuchtdichte des Hintergrundbeleuchtungsmoduls und einem oder mehreren mechanischen und einem oder mehreren optischen Parametern als eine oder mehrere lineare Gleichungen definiert;

c) Anwenden (110) von Beschränkungen auf die Werte der mechanischen und optischen Parameter innerhalb des Modells;

d) Lösen (112) der einen oder mehreren linearen Gleichungen auf einem Computersystem unter Verwendung des Modells und der definierten Beschränkungen, wobei lineare iterative Verfahren verwendet werden, um eine Konfiguration mechanischer und optischer Komponenten zu erzeugen, die eine Gestaltung eines Hintergrundbeleuchtungsmoduls bilden, das für die Leuchtdichte optimiert ist; und

e) Erzeugen (114) einer Gestaltung für ein Hintergrundbeleuchtungsmodul auf Grundlage der erzeugten Konfiguration.

2. Verfahren nach Anspruch 1, wobei die Leuchtdichte die Leuchtdichte eines bestimmten zentralen Punktes der Anzeigevorrichtung ist.

3. Verfahren nach Anspruch 1 oder 2, wobei die Flachbildschirm-Anzeigevorrichtung eine LED-Hintergrundbeleuchtung aufweist.

4. Verfahren nach Anspruch 3, wobei die LED-Hintergrundbeleuchtung dazu konfiguriert und angeordnet ist, den LCD-Bildschirm im Betrieb direkt von hinten zu beleuchten.

5. Verfahren nach einem der vorangegangenen Ansprüche, wobei eine oder mehrere mechanische Beschränkungen eine oder mehrere von Folgendem umfassen: obere und/oder untere Grenzen mechanischer Variablen; Abstand mechanischer Teile zu dem aktiven Bereich; mechanische Ausrichtung und/oder Beabstandung einer oder mehrerer Linsen, die Teil einer Flachbildschirmgestaltung sind.

6. Verfahren nach einem der vorhergehenden Ansprüche, wobei eine oder mehrere der optischen Einschränkungen die Gleichmäßigkeit der Lichtemission umfasst.

7. Verfahren nach einem der vorhergehenden Ansprüche, wobei Schritt b) mindestens teilweise auf empirisch ermittelten mechanischen und optischen Parameterwerten basiert.

8. Verfahren nach einem der vorangegangenen Ansprüche, ferner umfassend den folgenden Schritt:
f) Herstellen eines Hintergrundbeleuchtungsmoduls, das gemäß der erzeugten Gestaltung definiert ist.

## Revendications

1. Procédé de conception d'un module de rétroéclairage pour un dispositif d'affichage à écran plat comportant un panneau d'affichage à cristaux liquides, LCD, le procédé comprenant les étapes de :

a) définition (100) de paramètres mécaniques et optiques pour les composants mécaniques et optiques du dispositif d'affichage, où un ou plusieurs des paramètres mécaniques comprennent : les distances mécaniques jusqu'à une ou plusieurs lignes de zone active, AA, représentant la frontière de la zone active du panneau d'affichage, comprenant la distance depuis un bord d'un cadre central à la ligne AA, la distance depuis un bord d'un film optique à la ligne AA, la distance depuis un bord d'un film diffuseur à la ligne AA, la distance depuis un bord d'une feuille de réflecteur à la ligne AA, et la distance depuis un bord d'un capot avant à la ligne AA ; l'angle d'un ou plusieurs bords d'une unité de rétroéclairage de capot arrière faisant partie d'une conception d'affichage à écran plat ; et l'angle d'un ou plusieurs bords d'une feuille de réflecteur faisant partie d'une conception d'affichage à écran plat ; et où un ou plusieurs des paramètres optiques comprennent : le nombre de lentilles dans une région prédéfinie ; et le rapport de lentille des une ou plusieurs lentilles faisant partie d'une conception d'affichage à écran plat ;

b) génération (108) d'un modèle basé au moins en partie sur les paramètres mécaniques et optiques définis, le modèle définissant une ou plusieurs relations entre une luminance du module de rétroéclairage et un ou plusieurs paramètres mécaniques et un ou plusieurs paramètres optiques comme une ou plusieurs équations linéaires ;

c) application (110) de contraintes sur les valeurs des paramètres mécaniques et optiques dans le modèle ;

d) résolution (112), en utilisant le modèle et lesdites contraintes définies, desdites une ou plusieurs équations linéaires sur un système informatique à l'aide de procédés d'itération linéaire pour générer une configuration de composants mécaniques et optiques formant une conception d'un module de rétroéclairage qui est optimisé pour ladite luminance ; et

e) génération (114) d'une conception pour un module de rétroéclairage sur la base de ladite configuration générée.

2. Procédé selon la revendication 1, dans lequel ladite luminance est la luminance d'un point central spécifié du dispositif d'affichage.

3. Procédé selon la revendication 1 ou 2, dans lequel le dispositif d'affichage à écran plat a un rétroéclairage à DEL.

4. Procédé selon la revendication 3, dans lequel le rétroéclairage à DEL est configuré et agencé, en utilisation, pour éclairer le panneau LCD directement depuis l'arrière.

5. Procédé selon l'une quelconque des revendications précédentes, dans lequel une ou plusieurs contraintes mécaniques comprennent un ou plusieurs parmi : limites supérieures et/ou inférieures de variables mécaniques ; distance de pièces mécaniques à la zone active (AA) ; orientation mécanique et/ou espacement des une ou plusieurs lentilles faisant partie d'une conception d'affichage à écran plat.

6. Procédé selon l'une quelconque des revendications précédentes, dans lequel une ou plusieurs des contraintes optiques comprennent l'uniformité de l'émission lumineuse.

7. Procédé selon l'une quelconque des revendications précédentes, dans lequel l'étape b) est basée au moins en partie sur des valeurs empiriques obtenues de paramètres mécaniques et optiques.

8. Procédé selon l'une quelconque des revendications précédentes, comprenant en outre l'étape de :
f) production d'un module de rétroéclairage défini selon la conception générée.

*Fig. 1*

10

12

14

16

18

20

*Fig. 2*

20

22

24

*Fig. 3*

**100**     Define optimisation parameter

**102**     Generate data table for mechanical properties

**104**     Generate data table for optical properties

**106**     Perform stepwise regression

**108**     Select model

**110**     Specify constraints

**112**     Solve system

**114**     Determine optimal design

*Fig. 4*

| ACTIVE AREA (x) | | | | |
|---|---|---|---|---|
| | -x/2 | -x/4 | x/4 | x/2 |

*Fig. 5*

Active Area Line

*Fig. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015241624 A1

- US 2010020264 A

**Non-patent literature cited in the description**

- **CHEN et al.** Design of a backlight module with a freeform surface by applying the Taguchi method. *Chinese Optics Letters,* vol. 13 (3), 032302

- **MALLOWS'S CP.** Bayesian information criterion. PRESS